(19) Europäisches Patentamt
European Patent Office
Office européen des brevets

(11) **EP 3 339 729 A1**

(12) **DEMANDE DE BREVET EUROPEEN**

(43) Date de publication:
**27.06.2018 Bulletin 2018/26**

(51) Int Cl.:
*F22B 1/18* (2006.01)     *F22B 3/04* (2006.01)

(21) Numéro de dépôt: **17209145.6**

(22) Date de dépôt: **20.12.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD TN**

(30) Priorité: **21.12.2016 FR 1663064**

(71) Demandeur: **Commissariat à l'énergie atomique et aux énergies alternatives**
**75015 Paris (FR)**

(72) Inventeur: **WYTTENBACH, Joël**
**73230 THOIRY (FR)**

(74) Mandataire: **Brevalex**
**95, rue d'Amsterdam**
**75378 Paris Cedex 8 (FR)**

(54) **DISPOSITIF DE GENERATION DE VAPEUR UTILISANT UNE SOURCE DE CHALEUR A BASSE TEMPERATURE**

(57)     Dispositif de génération de vapeur à un pression d'au moins quelques milliers de pascals utilisant une source de chaleur à basse température (S), comportant une chambre (2) de génération de vapeur à basse pression et basse température, ladite chambre (2) étant configurée pour générer de la vapeur au moins par sublimation d'un solide et/ou évaporation d'un liquide, ladite chambre (2) étant également configurée pour échanger de la chaleur avec la source de chaleur à basse température (S), une pompe à vide (4) pour abaisser la pression dans ladite chambre (2) et pour comprimer la vapeur générée dans ladite chambre (2) et des moyens de régulation de la température de la pompe à vide de sorte que la vapeur ne condense pas dans la pompe à vide (4) comportant un échangeur thermique (15) en contact avec la pompe à vide.

FIG.1

EP 3 339 729 A1

**Description**

**DOMAINE TECHNIQUE ET ÉTAT DE LA TECHNIQUE ANTÉRIEURE**

La présente invention se rapporte à dispositif de génération de vapeur utilisant une source de chaleur à basse température, la vapeur produite étant par exemple à une pression d'au moins quelques milliers de Pa, voire étant la pression atmosphérique.

L'eau sous forme vapeur présente un potentiel énergétique supérieur à celui de l'eau à l'état liquide ou à l'état solide. La vapeur peut par exemple être utilisée dans des procédés mettant en oeuvre des réactions d'hydratation exothermiques telles que les procédés de stockage de chaleur thermochimiques. La vapeur peut également être utilisée dans des systèmes de production de chaleur par changement de phase ou par réaction de sorption.

Les systèmes utilisant de la vapeur fonctionnent généralement sous pression atmosphérique.

Cependant les systèmes de génération de vapeur d'eau à pression atmosphérique de l'état de la technique utilisent une source de chaleur à température relativement élevée.

Il existe des dispositifs générant de la vapeur à très basse température. Le document US 5 787 716 décrit une installation produisant du $CO_2$ gazeux basse température par sublimation de $CO_2$ sous forme de glace, le $CO_2$ gazeux à basse température servant à congeler des denrées alimentaires. La sublimation de la glace est obtenue en abaissant la pression dans une chambre à vide. Le $CO_2$ gazeux produit est à basse température. Cette installation ne permet pas de produire un fluide gazeux à pression atmosphérique. Le document WO89/12201 décrit une installation de traitement de liquide comportant un vaporisateur et une pompe à vide qui génère du vide dans le vaporisateur pour générer de la vapeur à relativement basse température dans le vaporisateur. Un échangeur thermique refroidit la pompe à vide.

**EXPOSÉ DE L'INVENTION**

C'est par conséquent un but de la présente invention d'offrir un dispositif de génération de vapeur à une pression d'au moins quelques milliers de pascals, entre environ 8000 Pa et au moins 100000 Pa ne nécessitant pas une source de chaleur à température élevée, voire fonctionnant avec une source de chaleur à température négative.

Le but énoncé ci-dessus est atteint par un dispositif de génération de vapeur comportant des moyens produisant de la vapeur à basse température et basse pression, une pompe à vide comprimant cette vapeur pour l'amener à la pression souhaitée, et des moyens de régulation de la température de la pompe à vide de sorte à éviter la condensation de la vapeur dans la pompe à vide.

La production de vapeur à basse température et à basse pression peut être faite en apportant de la chaleur « à basse température », voire à une température inférieure à 0°C. Le dispositif ne requiert donc pas une source de chaleur à température élevée. Les moyens de régulation de la température de la pompe à vide permettent d'extraire la chaleur produite par la compression de la vapeur. En effet, lors de sa compression, la vapeur peut subir un échauffement important. En récupérant celle-ci et en la valorisant, on augmente le rendement du dispositif. L'extraction de la chaleur produite dans la pompe est contrôlée afin d'éviter une condensation de la vapeur dans la pompe.

Grâce à l'invention, l'énergie peut être valorisée pour une part sous forme de vapeur et pour une part sous forme de chaleur.

Dans un mode de réalisation, le dispositif fonctionne en cycle ouvert.

La chaleur récupérée peut servir à produire également de la vapeur secondaire.

Dans un autre mode de réalisation, la vapeur produite peut être utilisée comme source de chaleur associée à la chaleur récupérée.

Les moyens de régulation de la température comportent par exemple un échangeur thermique dans lequel circule un fluide caloporteur. Le débit du caloporteur est réglé en fonction de la quantité de chaleur à extraire.

De manière très avantageuse, la vapeur est produite dans une chambre adaptée pour produire de la vapeur par évaporation et/ou sublimation en abaissant la pression, par exemple à partir de glace. Dans le cas de la sublimation, l'apport de chaleur peut être assuré directement par l'air extérieur.

La présente invention permet alors d'utiliser l'eau comme fluide de travail. En effet l'inventeur a déterminé qu'il pouvait produire de la vapeur d'eau à pression atmosphérique avec une pompe à vide, alors que dans l'état de la technique, on évite autant que faire se peut le contact entre l'eau et l'intérieur des pompes à vide afin d'éviter leur endommagement, en particulier de leurs pièces en mouvement, notamment du fait du risque de condensation dans la pompe. Mais vu l'échauffement que peut subir la vapeur d'eau lors de sa compression, les risques de condensation sont très faibles et peuvent être évité simplement en contrôlant la quantité de chaleur extraite de la pompe à vide.

Dans un mode de fonctionnement avantageux, la chaleur récupérée de la pompe à vide est utilisée pour générer de la vapeur par ailleurs, par exemple dans une chaudière. La quantité totale de vapeur produite par le dispositif est alors augmentée.

En d'autres termes, au lieu de produire directement une vapeur à pression atmosphérique, ce qui requerrait une source de chaleur à haute température, on produit une vapeur basse pression puis celle-ci est comprimée, pour l'amener à sa pression d'utilisation. Ainsi il peut utiliser une source de chaleur à température plus basse qui est disponible en grande quantité pour produire la vapeur. Et on récupère de la chaleur produite lors de la compression.

La présente invention a alors pour objet un dispositif de génération de vapeur à une pression d'au moins quelques milliers de pascals utilisant une source de chaleur à basse température, comportant une chambre de génération de vapeur à basse pression et basse température, ladite chambre étant configurée pour générer de la vapeur par sublimation d'un solide et/ou évaporation d'un liquide, ladite chambre étant également configurée pour échanger de la chaleur avec la source de chaleur à basse température, une pompe à vide pour abaisser la pression dans ladite chambre et pour comprimer la vapeur générée dans ladite chambre et des moyens de régulation de la température de la pompe à vide de sorte que la vapeur ne condense pas dans la pompe à vide.

De préférence le dispositif comporte un premier échangeur thermique dans la chambre, ledit premier échangeur thermique étant destiné à être connecté à la source de chaleur à basse température.

De manière avantageuse, les moyens de régulation de la température de la pompe à vide comportent un deuxième échangeur thermique configuré pour échanger de la chaleur avec la pompe à vide et destiné à être traversé par un caloporteur.

Les moyens de régulation de la température de la pompe à vide peuvent comporter au moins un premier capteur de température du caloporteur en sortie du deuxième échangeur thermique et des moyens de régulation du débit de caloporteur dans le deuxième échangeur thermique commandés à partir des signaux fournis par le premier capteur de température.

Avantageusement le dispositif de génération de vapeur comporte au moins un deuxième capteur de température dans la chambre.

Le dispositif de génération de vapeur comporte avantageusement un capteur ou des capteurs de pression en amont et/ou en aval de la pompe à vide.

De manière préférée, le dispositif de génération de vapeur comporte une unité de commande commandant au moins la pompe à vide et les moyens de régulation de la température de la pompe à vide en fonction des signaux envoyés par les capteurs.

Dans un exemple de réalisation, le dispositif de génération de vapeur peut comporter une chaudière de production de vapeur comprenant un troisième échangeur thermique connecté en circuit fermé avec le premier échangeur thermique. La chambre et la chaudière peuvent être destinées à être connectés à un réseau d'alimentation en eau, ledit dispositif pouvant comporter des moyens pour autoriser et interrompre la communication fluidique entre la chambre et le réseau d'eau et entre la chaudière et le réseau d'eau.

Dans un autre exemple de réalisation, le deuxième échangeur thermique est configuré pour produire directement de la vapeur. La chambre et le deuxième échangeur peuvent être destinés à être connectés à un réseau d'alimentation en eau, ledit dispositif comportant des moyens pour autoriser et interrompre la communication fluidique entre la chambre et le réseau d'eau et entre le deuxième échangeur thermique et le réseau d'eau.

De manière avantageuse, la chambre est du type batterie à ailettes.

La présente invention a également pour objet un système de production de chaleur comportant au moins un dispositif de génération de vapeur selon l'invention, un quatrième échangeur thermique destiné à transmettre la chaleur de la vapeur produite par ledit dispositif à un circuit utilisateur, et un réservoir de collecte connecté au quatrième échangeur thermique et destiné à collecter la vapeur condensée. Le dispositif de génération de vapeur, le quatrième échangeur thermique et le réservoir de collecte peuvent être connectés en circuit fermé.

Selon une réalisation, la chaudière est connectée au réservoir de collecte et la chambre est connectée au réservoir de collecte.

Dans une autre réalisation, le deuxième échangeur thermique est connecté au réservoir de collecte et la chambre est connectée au réservoir de collecte.

La présente invention a également pour objet un système de stockage de chaleur par voie thermochimique comportant un dispositif de génération de vapeur selon l'invention, au moins un réservoir de stockage de chaleur par voie thermochimique contenant du matériau de stockage de chaleur par voie thermochimique et des moyens pour collecter la chaleur libérée par le matériau de stockage par voie thermochimique.

La présente invention a également pour objet un procédé de génération de vapeur à une pression donnée d'au moins quelques milliers de pascals et à une température donnée utilisant une source de chaleur à une basse température donnée, comportant les étapes :

a) remplissage au moins partiel d'une chambre avec un fluide liquide et fermeture étanche de la chambre,

b) diminution de la pression dans ladite chambre, au moyen d'une pompe à vide, jusqu'à atteindre une pression de travail et une température inférieure à la température donnée de la source de chaleur à basse température et,

c) lorsque la température dans la chambre est inférieure à la température de la source de chaleur, apport de chaleur au fluide par la source de chaleur,

d) production de vapeur,

e) compression et chauffage de la vapeur pour l'amener à la pression donnée et à la température donnée au moyen de la pompe à vide,

f) régulation de la température de la pompe à vide pour éviter la condensation de la vapeur dans la pompe à vide,

g) arrêt de la génération de vapeur.

L'étape g) peut avoir lieu lorsque la chambre est vide.

La source de chaleur à basse température est avantageusement l'air ambiant. Le fluide est avantageusement de l'eau et la vapeur générée est avantageusement à pression atmosphérique.

**BRÈVE DESCRIPTION DES DESSINS**

La présente invention sera mieux comprise sur la base de la description qui va suivre et des dessins en annexe sur lesquels:

- la figure 1 est une représentation schématique d'un dispositif de production de vapeur directe et de chaleur selon un exemple de réalisation de la présente invention,
- la figure 2 est une représentation schématique d'un exemple de dispositif de production de vapeur directe de la présente invention, dans lequel la chaleur collectée est utilisée pour produire de la vapeur secondaire,
- la figure 3 est une représentation schématique d'un autre exemple de dispositif selon l'invention de production de vapeur directe et secondaire de manière intégrée,
- la figure 4 est une représentation du diagramme de Mollier de l'eau comportant en abscisse l'enthalpie E en kj.kg$^{-1}$ et en ordonnée la pression en kPa,
- la figure 5 est une représentation schématique d'un exemple de réalisation d'un générateur de chaleur mettant en oeuvre un dispositif selon l'exemple de la figure 3,
- la figure 6 est une représentation schématique d'un autre exemple de réalisation d'un générateur de chaleur mettant en oeuvre un dispositif selon l'invention, selon l'exemple de la figure 2,
- la figure 7 est une représentation schématique d'un exemple de réalisation d'une installation de stockage de chaleur par voie thermochimique mettant en oeuvre un dispositif selon l'invention,
- la figure 8 est une représentation du diagramme de Mollier de l'eau comportant en abscisse l'enthalpie h en kj.kg$^{-1}$ et en ordonnée la pression en kPa en fonctionnement en cycle fermé,
- figures 9A et 9B sont des représentations graphiques de la variation des coefficients de performance COP en fonction de la température d'évaporation/sublimation T en °C pour un dispositif en circuit ouvert et un système en circuit fermé respectivement,
- la figure 10A est une vue en perspective d'un exemple de chambre de génération de vapeur particulièrement adaptée à la présente invention,
- la figure 10B est une vue en coupe longitudinale d'un exemple de la figure 10A selon le plan A-A,
- la figure 10C est une vue en coupe selon le plan transversale B-B de la figure 10B.

**EXPOSÉ DÉTAILLÉ DE MODES DE RÉALISATION PARTICULIERS**

Dans la description qui va suivre, les exemples de réalisation seront décrits en considérant la production de vapeur d'eau, mais ceci n'est pas limitatif et la présente invention permet à la production de vapeur d'autres fluides, tels que l'acétone, le cyclohexane, l'éthanol, l'éthylbenzène, le $C_9H_5F_{15}O$ désigné HFE7500®, le méthanol ou le toluène.

Par ailleurs, la description qui va suivre décrit le fonctionnement des dispositifs pour générer de la vapeur à pression atmosphérique et à 100°C, notamment dans le cas d'un dispositif en circuit ouvert, mais le dispositif permet d'obtenir une vapeur à la pression souhaitée et à la température souhaitée qui est au-dessus de la température de condensation à la pression souhaitée, par exemple dans le cas d'un dispositif fonctionnement en circuit fermé.

Dans la présente description, les termes « fluide », « liquide » et « vapeur » se rapportent à l'eau.

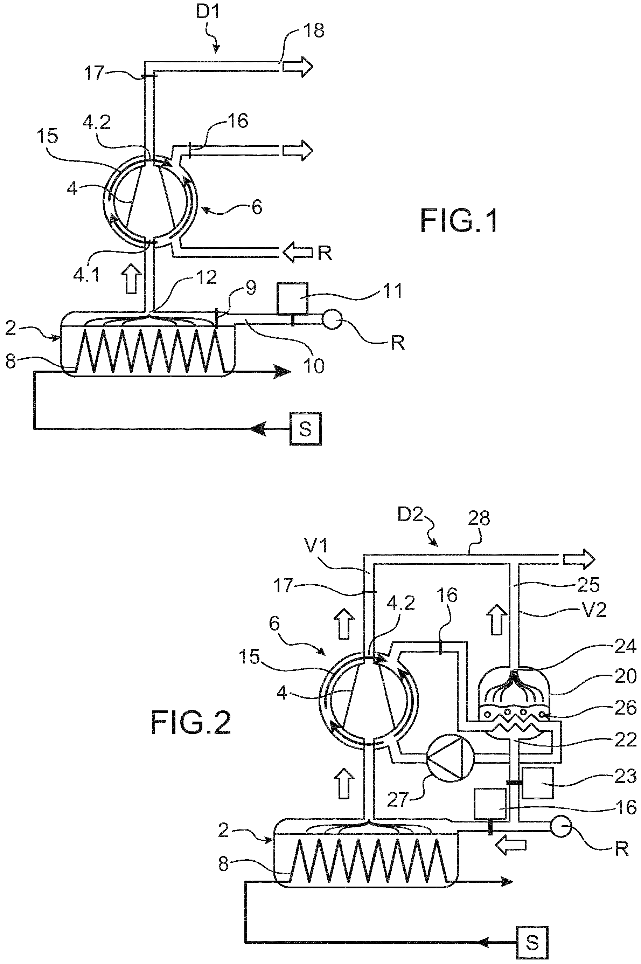

Sur la figure 1, on peut voir un exemple de réalisation d'un dispositif D1 de production ou de génération de vapeur comportant une chambre de génération de vapeur basse pression 2, une pompe à vide 4 dont l'extrémité basse pression 4.1 est connecté à la chambre 2, et l'extrémité haute pression 4.2 est connectée à la sortie du dispositif. Le dispositif D1 comporte également des moyens de régulation 6 de la température dans la pompe à vide 2.

La chambre 2 comporte également un premier échangeur de chaleur 8 entre l'eau contenue dans la chambre 2 et une source de chaleur basse température extérieure S. Le premier échangeur 8 sera désigné dans la suite de la description par « échangeur froid ».

Dans la présente demande, on entend par « source de chaleur basse température » une source de chaleur dont la température est comprise par exemple entre -15°C et +20°C, de manière non limitative.

La chambre 2 comporte une enceinte étanche permettant l'abaissement de la pression avantageusement à des valeurs comprises entre 100 Pa et 2000 Pa.

L'enceinte comporte une entrée d'alimentation 10 en eau, par exemple destinée à être connectée au réseau R urbain d'alimentation en eau. Des moyens 11 de type vanne, avantageusement une électrovanne, permettent d'autoriser ou d'interrompre l'alimentation en eau de la chambre 2. La chambre 2 comporte également une sortie 12 connectée à l'extrémité basse pression 4.1 de la pompe à vide. La sortie 12 est disposée en partie supérieure de la chambre 2 au-dessus du niveau maximal d'eau liquide ou solide. La chambre 2 et l'échangeur froid 8 sont adaptés pour fonctionner avec de la glace. De préférence, la chambre comporte un capteur du niveau de liquide.

Un capteur de température 9 dans la chambre 2 est également prévu.

Des exemples de chambre et d'échangeurs seront décrits dans la suite de la description.

L'enceinte comporte des parois adaptées à tenir les basses pressions, par exemple de l'ordre de 100 Pa.

Les moyens de régulation de la température dans la pompe à vide comportent un deuxième échangeur thermique 15, dans lequel un caloporteur est destiné à circuler. En général le caloporteur est destiné à extraire la chaleur de la pompe à vide 4. En effet la compression de la vapeur provoque un échauffement important qui peut atteindre plusieurs centaines de degrés Celsius. Les moyens de régulation de la température dans la pompe à vide comportent également des moyens pour réguler la circulation du caloporteur dans le deuxième échangeur 15, de sorte que la température dans la pompe à vide 4 reste au-dessus de la température de condensation pour éviter l'apparition de vapeur d'eau dans la pompe à vide 4. L'extraction de la chaleur est donc telle que la température de la vapeur à la pression atmosphérique en sortie de la pompe soit à environ à 100°C, voir quelques °C supplémentaires. La régulation de la circulation peut se faire par régulation du débit au moyen d'une vanne à débit variable. Si la température est supérieure à une valeur seuil le débit de caloporteur est augmenté, augmentant la quantité de chaleur extraite, si la température se rapproche trop de la température de condensation, le débit est réduit, réduisant la quantité de chaleur extraite.

Le deuxième échangeur thermique 15 est par exemple intégré dans le carter de la pompe à vide de sorte que le caloporteur circule au plus près de la zone dont la température est à réguler. De préférence, des moyens d'isolation thermique sont prévus autour de la pompe à vide pour limiter les fuites thermiques et améliorer la quantité de chaleur récupérée par l'échangeur 15.

L'entrée d'alimentation et la sortie d'évacuation du deuxième échangeur thermique 15 peut être connectées à une boucle de chauffage fermée, des moyens sont prévus pour réguler le débit.

En variante, le deuxième échangeur peut être alimenté à partir d'un réservoir, une pompe hydraulique peut être mise en oeuvre pour faire circuler le caloporteur dans l'échangeur thermique. La pompe hydraulique est avantageusement à débit variable, elle peut alors augmenter ou diminuer le débit de caloporteur dans l'échangeur 15 en fonction de la quantité de chaleur à extraire. Une charge thermique, telle que des radiateurs, est relié au deuxième échangeur.

Un capteur de température 16 est prévu par exemple en sortie de l'échangeur 15 intégré à la pompe à vide. Un capteur de température peut être prévu en sortie de la pompe à vide.

Un ou des capteurs de pression en amont et/ou en aval de la pompe à vide sont de préférence prévus. Dans l'exemple de la figure 1, un capteur de pression 17 est prévu en aval de la pompe à vide. En variante, un capteur de débit pour mesurer le débit de vapeur est prévu, par exemple en aval de la pompe à vide.

Une unité de commande pilote entre autres la pompe à vide, la circulation de caloporteur dans l'échangeur froid 8 et le ou les vannes en fonction des signaux transmis par les différents capteurs, notamment le ou les capteurs de pression, le ou les capteurs de température.

L'échangeur froid 8 est tel qu'il assure un apport de chaleur à l'eau contenue dans la chambre 2. Selon l'invention, la source de chaleur S est à basse température, voire à une température inférieure à 0°C. La source de chaleur S peut être formée par un caloporteur gazeux, comme l'air par exemple l'air extérieur, l'air d'un puits canadien, ou liquide comme l'eau d'un système de géothermie. Par exemple, l'échangeur froid 8 peut comporter des ailettes en saillie de la surface extérieure des parois de l'enceinte. Un ventilateur (non représenté) permet avantageusement une circulation de l'air le long et entre les ailettes pour apporter la quantité d'énergie nécessaire à la génération de vapeur. En variante, on peut envisager que les ailettes baignent dans un liquide en écoulement et avec lequel elles échangent de la chaleur. En variante encore, l'échangeur froid 8 peut comporter un ou plusieurs tubes circulant dans la chambre et dans lesquels circule un fluide liquide ou gazeux. Le ou les tubes peuvent eux-mêmes comporter des ailettes pour favoriser les échanges avec l'eau contenue dans la chambre et destinée à être vaporisée. Lorsque la vapeur est produite par sublimation d'eau solide, la source de chaleur à basse température peut être gazeuse, ce qui évite que le caloporteur se solidifie au contact de l'enceinte. En variante, un caloporteur présentant une température de solidification basse, tel qu'un liquide comportant un antigel, pourrait être utilisé.

La chambre et le deuxième échangeur 15 peuvent être tous les deux reliés à la même source d'eau liquide, dans ce cas le deuxième échangeur 15 peut permettre de produire de l'eau chaude sanitaire. De préférence, le deuxième échangeur est relié à un circuit fermé, par exemple de chauffage.

La sortie 18 du dispositif de production de vapeur est destinée à être connectée à un système utilisateur, par exemple un système thermodynamique ou un système de stockage de chaleur thermochimique comme cela sera décrit ci-dessous, ou à tout autre système utilisant de la vapeur

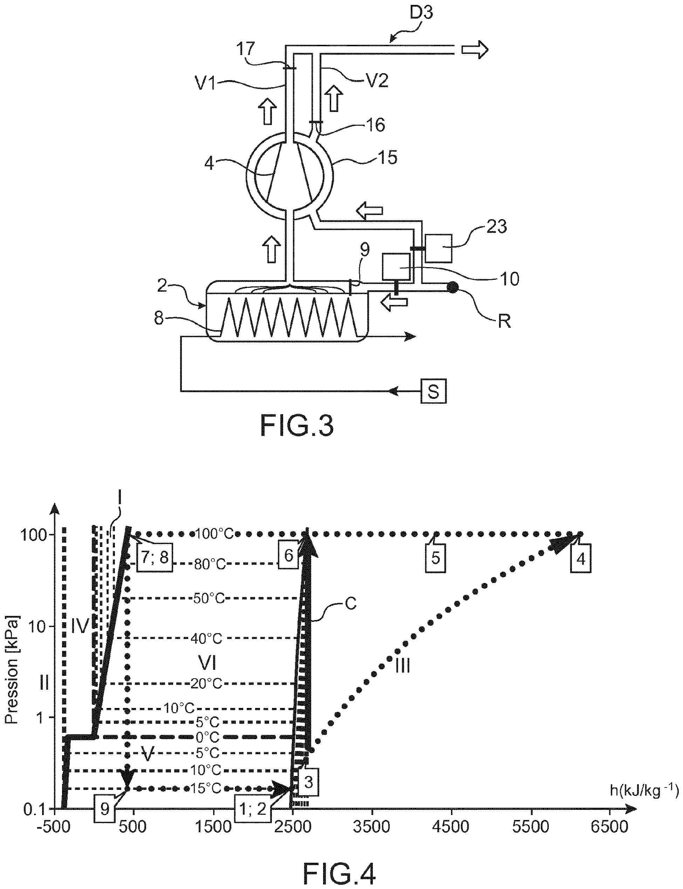

Le fonctionnement du dispositif de génération de vapeur de la figure 1 va maintenant être décrit à l'aide du diagramme de Mollier de la figure 4.

D'autres exemples de réalisation d'un dispositif de génération de vapeur selon l'invention seront décrits par la suite. Dans ce mode de fonctionnement, la vapeur est produite par sublimation de la glace.

Le fonctionne du dispositif est le suivant :

L'eau dans la chambre 2 est transformée en vapeur basse température basse pression par génération d'une dépression au moyen de la pompe à vide 4. Cette vapeur est comprimée dans la pompe à vide 4. Dans la pompe à vide 4, la vapeur est, dans un premier temps, échauffée à la température de production de la vapeur souhaitée qui est au moins une température à laquelle la vapeur ne condense pas, et, dans un deuxième temps, la chaleur excédentaire générée pendant la phase de compression est collectée par le deuxième échangeur thermique 15. La vapeur sortant de la pompe à vide 4 est à la pression souhaitée et à la température souhaitée

Le diagramme de Mollier de l'eau représenté sur la figure 4 comporte six zones :

Zone I : phase liquide uniquement,
Zone II : phase solide uniquement,
Zone III : phase vapeur uniquement,
Zone IV : mélange liquide-solide,
Zone V : mélange solide-vapeur,
Zone VI : mélange liquide-vapeur.

Les courbes isothermes sont représentées en pointillés et leur température est précisée sur la figure 4.
L'abscisse représente l'enthalpie en kJ.kg$^{-1}$ et l'ordonnée représente la pression en kPa.
Le fonctionnement du dispositif va maintenant être décrit en détail.
Au démarrage du dispositif, la chambre 2 est remplie avec de l'eau liquide en ouvrant la vanne 11. Le deuxième échangeur de chaleur 15 est également rempli de caloporteur. De préférence la chambre 2 est remplie en eau liquide à environ 80% de son volume. Il sera compris que l'on peut envisager, suivant les configurations de chambre, un remplissage beaucoup plus faible par exemple 5% du volume jusqu'à un remplissage de 90% dans le cas d'un fonctionnement en glace dans la chambre 2, ou jusqu'à un remplissage complet dans le cas d'un fonctionnement en liquide dans la chambre 2. Le volume de remplissage en eau liquide est choisi de sorte que l'orifice d'aspiration 12 ne soit pas obturé par l'eau liquide ou solide. Par ailleurs, il est tenu compte de la dilatation de l'eau lors de sa solidification pour le remplissage de la chambre 2. La température de l'eau est par exemple à environ 10°C. La pompe vide 4 est à l'arrêt ainsi que la circulation de caloporteur dans l'échangeur froid 8.
La vanne 11 est fermée, ce qui interrompt l'alimentation en eau.
Initialement, l'eau dans la chambre 2 est sous forme liquide, on se trouve dans la zone 1.
La pompe à vide 4 est activée, le tirage au vide dans la chambre 2 commence et la pression dans la chambre 2 baisse. Il n'y a pas d'échange de chaleur avec l'extérieur. On suit la flèche A dans le sens des pressions décroissantes. On passe alors de la zone I à la zone V, l'eau se solidifie et coexiste un mélange eau solide et eau vapeur. La pompe à vide 4 extrait la vapeur produite jusqu'à atteindre la pression de production de travail entre 100 Pa et 600 Pa dans l'exemple représenté. Dans l'exemple représenté, la pression de travail est de 166 Pa et la glace à -15°C. La pression de travail est choisie pour que la température de l'eau dans la chambre 2 soit inférieure à la température extérieure. La pression de travail peut être assujettie à la température extérieure et être variable.
La circulation de caloporteur dans le deuxième échangeur 15 est activée lorsqu'un seuil de température de la pompe à vide est détecté, par exemple en sortie de la pompe à vide. La température dans la pompe à vide 4 est alors régulée en faisant varier le débit du caloporteur circulant dans l'échangeur 15.
Lorsque la température dans la chambre 2 baisse en dessous de la température de la source de chaleur S, la circulation du caloporteur provenant de la source de chaleur S dans l'échangeur froid 8 est activée par exemple en activant le ventilateur. Cet apport de chaleur provoque une production de vapeur. On se déplace sur la flèche B dans le sens de l'enthalpie croissante. La quantité d'eau solide diminue. Tant que l'on reste dans la zone V sur la flèche B, la température de la vapeur suit une isotherme qui est l'isotherme -15°C dans l'exemple représenté. La pression de la vapeur est également constante. Simultanément la pompe à vide 4 continue à extraire la vapeur de la chambre maintenant la pression dans la chambre 2 à la pression de travail. L'eau dans la chambre étant solide, la vapeur est produite par sublimation. Si l'eau était liquide, la vapeur serait produite par évaporation.
Lorsque tout le fluide dans la chambre a été sublimé, la pression baisse en-dessous de la pression de travail. Lorsque la pression passe en dessous d'un seuil, la pompe à vide 4 détecte une baisse du débit, commandant l'arrêt de la pompe à vide est arrêtée, ainsi que la circulation du caloporteur provenant de la source S.
Afin d'assurer un flux gazeux dans la pompe vide 4, on assure une surchauffe de la vapeur de 5°C (points 1-2), due à l'échangeur froid 8 et à la source S dont la température, par exemple -10°C, est supérieure à la température de génération de la vapeur.
La vapeur extraite de la chambre 2 est comprimée dans la pompe à vide 4. On se déplace dans le sens de la pression et de l'enthalpie croissantes entre les points 2 et 3. La compression génère de la chaleur. Dans une première phase, cette chaleur est utilisée pour porter la vapeur à la température à laquelle on souhaite récupérer la vapeur à la sortie de la pompe à vide, par exemple 100°C dans l'exemple représenté. En outre cette température est telle que la vapeur ne peut pas condenser dans la pompe à vide 4. La vapeur est comprimée à une pression inférieure à la pression souhaitée de 10$^5$ Pa. On atteint le point 3.
Dans une deuxième phase entre 3 et 6 (flèche C), la vapeur est ensuite comprimée par la pompe à vide 4 sensiblement à température constante. La chaleur générée par la compression est extraite par le deuxième échangeur 15 de sorte que la température de la vapeur reste sensiblement constante. Cette chaleur est par ailleurs valorisée. Le débit de caloporteur dans le deuxième échangeur 15 est régulé pour maintenir la vapeur à environ 100°C et notamment pour éviter que sa température baisse et qu'un risque de condensation de la vapeur apparaisse.

On obtient alors une vapeur à pression atmosphérique à une température d'environ 100°C.

La pompe à vide, du fait de sa fonction, génère simultanément de la vapeur basse pression basse température dans la chambre 2 et comprime de la vapeur et l'échauffe. Grâce à l'invention on récupère l'énergie sur le flux compressé et sur la chaleur récupérée par le deuxième échangeur 1 5et valorisée.

La température de caloporteur dans le deuxième échangeur 15 peut être inférieure à la température de condensation en sortie de la pompe à vide, i.e. 100°C à pression atmosphérique. Par exemple elle peut être de 40°C. La loi de régulation des échanges thermiques entre le caloporteur et la pompe est alors adaptée à cette température du caloporteur sensiblement plus basse, pour ne pas refroidir excessivement la vapeur comprimée dans la pompe à vide. Par exemple le débit est limité de manière différente.

Le système peut fonctionner jusqu'à ce que toute l'eau contenue dans la chambre ait été évaporée, le système est alors arrêté et la chambre 2 est à nouveau remplie d'eau. Alternativement, la génération de vapeur peut être interrompue alors qu'il reste de l'eau dans la chambre. La production de vapeur est discontinue. L'évaporation dans la chambre est interrompue pour pouvoir remplir la chambre avec de l'eau liquide, ensuite la chambre est de nouveau fermée de manière étanche et la phase d'évaporation peut reprendre.

Dans un autre mode de fonctionnement, le dispositif peut produire de la vapeur par vaporisation de l'eau liquide, i.e. le dispositif peut fonctionner en phase liquide lorsque la température de la source de chaleur basse température S est supérieure au point triple, i.e. environ 0°C dans le cas de l'eau. Ainsi, l'eau liquide est évaporée lors de la détente et grâce à un apport de chaleur à température supérieure à 0°C. La vapeur ainsi produite est réchauffée, puis comprimée par la pompe à vide.

La somme des quantités d'énergie récupérées sous forme de vapeur et sous forme de chaleur est supérieure à la quantité d'énergie électrique requise pour faire fonctionner la pompe à vide. Le dispositif présente donc un coefficient de performance (rapport due la chaleur produite/travail fourni) supérieur à 1, même dans le cas d'une source de chaleur à -15°C et un rendement isentropique de compression de 50%. Dans des cas où la température de la source de chaleur est plus élevée par exemple de 15°C et la pompe à vide présente un rendement de 0,8, le coefficient de performance est de l'ordre de 2,7.

Il pourrait être envisagé de remplacer le fluide caloporteur circulant dans l'échangeur 15 par de l'eau à pression atmosphérique. Celle-ci serait vaporisée dans l'échangeur 15. De la vapeur serait produite directement par l'échangeur 15 en plus de celle produite par la pompe à vide.

Sur la figure 2, on peut voir un autre exemple de réalisation d'un dispositif D2 de production de vapeur selon l'invention, dans lequel la chaleur collectée par le deuxième échangeur sert à produire de la vapeur secondaire.

Le dispositif D2 est proche du dispositif D1 et comporte en outre une chaudière vapeur 20 comportant un orifice d'alimentation 22 connecté au réseau R par un vanne d'alimentation 23 et un orifice d'évacuation 24 connecté au système utilisateur de vapeur auquel est connecté la sortie haute pression 4.2 de la pompe à vide. Dans l'exemple représenté, le conduit 25 évacuant la vapeur V2 de la chaudière se connecte au conduit 28 évacuant la vapeur V1 de la pompe à vide 4, toute la vapeur V1 + V2 produite par le dispositif D2 est amenée vers le système utilisateur. En variante, la vapeur V2 produite par la chaudière pourrait alimenter un autre système utilisateur ou alimenter le même système utilisateur que la vapeur V1 de la pompe à vide mais par un conduit distinct.

Le dispositif comporte également un troisième échangeur de chaleur 26 disposé dans la chaudière et connecté au deuxième échangeur 15 de sorte à former un circuit en boucle fermée. Un circulateur 27 ou pompe hydraulique assure la circulation du caloporteur entre les échangeurs 15 et 26.

Le fonctionnement de ce dispositif va maintenant être décrit.

La génération de vapeur à 100°C et à pression atmosphérique par la pompe vide 4 à partir de la chambre 2 est similaire à celle décrite pour le dispositif D1.

La vanne 23 est ouverte pour remplir la chaudière 20. L'eau dans la chaudière 20 est à pression atmosphérique.

La chaleur collectée par le deuxième échangeur 15 dans la pompe vide 4 est transférée dans la chaudière par le troisième échangeur 26. Puisque le caloporteur sortant du deuxième échangeur 15 est à une température supérieure à la température de condensation, il provoque une vaporisation de l'eau contenue dans la chaudière 20 qui produit directement une vapeur à pression atmosphérique et à 100°C.

De préférence, la température du caloporteur sortant du deuxième échangeur 15 et entrant dans le troisième échangeur dans la chaudière 20 est à une température légèrement supérieure à la température de condensation en sortie de pompe à vide 4, par exemple 100°C, afin de générer de la vapeur à 100°C dans la chaudière 20 et non une vapeur surchauffée, qui serait une perte d'énergie puisque la vapeur V2 sortant de la chaudière est mélangée à la vapeur V1 à 100°C sortant de la pompe. En revanche, si la vapeur V2 produite par la chaudière alimente un système qui requiert de la vapeur surchauffée, le caloporteur sortant de la pompe à vide 4 peut être à une température très supérieure à la température de condensation en sortie de pompe à vide.

Grâce au dispositif de la figure 2, on produit une quantité de vapeur supérieure pour une même quantité d'énergie consommée par rapport au dispositif de la figure 1 qui produit de la vapeur via la pompe à vide et de la chaleur par l'échangeur 15 et par rapport à une chaudière vapeur classique, par exemple électrique.

Le démarrage et l'arrêt du circulateur 27 sont avantageusement synchronisés avec le démarrage et l'arrêt de la pompe à vide, ainsi le circulateur est mis en route lorsque la pompe à vide est mise en route.

Sur la figure 3, on peut voir un autre dispositif D3 permettant de produire également une quantité de vapeur augmentée.

Par rapport au dispositif D2, le dispositif D3 ne comporte pas de chaudière, mais l'entrée d'alimentation du deuxième échangeur 15 est connectée directement au réseau R par l'intermédiaire de la vanne d'alimentation 23 et la sortie d'évacuation du deuxième échangeur 15 est connectée au système utilisateur de vapeur. Une vanne 30 assure l'alimentation ou non du deuxième échangeur 15 par le réseau R.

Dans les exemples de figures 2 et 3, la vapeur produite à partir de la chaleur générée par la pompe à vide 4 est produite à partir d'un fluide identique à celui vaporisé dans la chambre 2. Mais il pourrait être prévu que le fluide soit différent, dans ce cas les vapeurs V1 et V2 ne pourraient pas être mélangées ; le fluide serait alors choisi pour effectivement se vaporiser avec la quantité de chaleur produite dans la pompe à vide à un niveau de température compatible avec le fluide compressé.

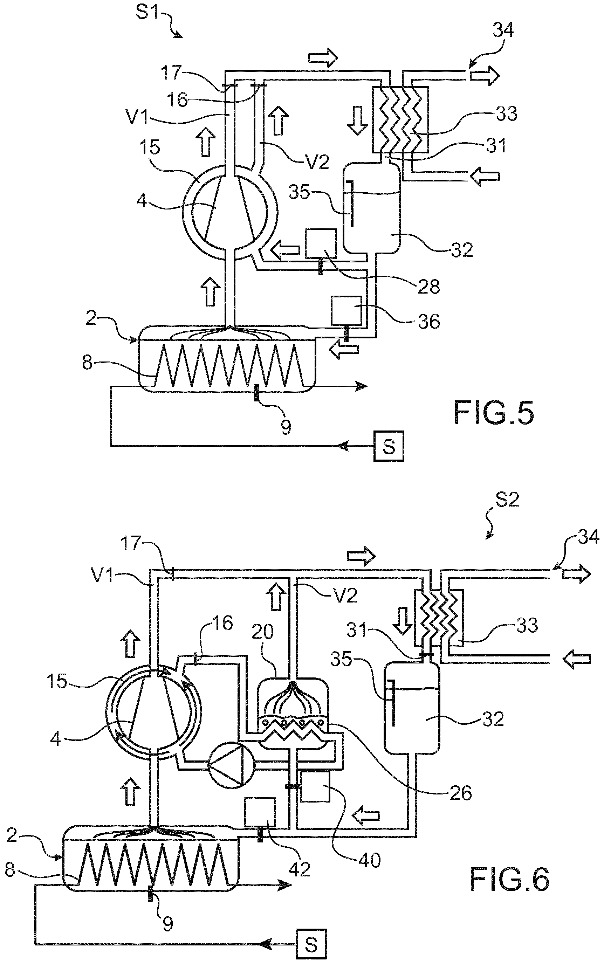

Le fonctionnement discontinu du dispositif présente l'avantage de permettre une répartition du fluide liquide dans la chambre même lorsque la source de chaleur est à une température négative. En effet, dans le cas d'un dispositif de production de vapeur, la chambre est alimentée avec de l'eau provenant du réseau à pression atmosphérique ou à une pression supérieure et sous forme liquide. Dans le cas d'un système de production de chaleur fonctionnant en boucle fermée, la chambre est alimentée par le fluide à la température proche de la température de sortie de la vapeur. De tels systèmes seront décrits en relation avec les figures 5 et 6. Dans tous les cas la chambre est alimentée en fluide liquide qui se répartit naturellement dans la chambre, notamment autour de l'échangeur froid. En revanche, dans un système continu la détente produit un mélange vapeur/glace qu'il est plus difficile de distribuer de manière uniforme autour de l'échangeur froid 8.

Des systèmes mettant en oeuvre un dispositif selon l'invention et fonctionnant en circuit fermé vont maintenant être décrits.

Sur la figure 5, on peut voir un système S1 destiné à produire de la chaleur à partir de la vapeur générée.

Le système S1 comporte un dispositif proche du dispositif D3, mais il diffère de D3 en ce que l'entrée d'alimentation de l'échangeur 15 n'est plus connectée au réseau R, mais à un réservoir de liquide 32 qui est alimenté par un quatrième échangeur thermique 33 connecté à la sortie de de vapeur de la pompe à vide et du deuxième échangeur 15.

Le quatrième échangeur 33 échange de la chaleur avec un fluide à chauffer, par exemple un fluide circulant dans un circuit 34 de chauffage d'un bâtiment.

En outre, la chambre 2 n'est plus non plus connectée au réseau R mais au réservoir 32, des vannes 36, 38 autorisent ou non l'alimentation entre le réservoir 32 et la chambre 2 et entre le réservoir 32 et le deuxième échangeur 15 respectivement.

Un capteur de température en aval du quatrième échangeur 33 peut être prévu.

De préférence, l'altitude du réservoir 32 et de l'échangeur 15 sont telles que l'échangeur 15 peut être alimenté par gravité par le réservoir 32 afin de limiter la consommation d'énergie électrique. En variante, un circulateur pourrait être prévu entre le réservoir 32 et le deuxième échangeur 15.

Le réservoir 32 comporte avantageusement un capteur du niveau de liquide 35 permettant de détecter le niveau de liquide en début de cycle de production de vapeur avant remplissage de la chambre et de l'échangeur 15 et le compléter si nécessaire. Le système fonctionne en circuit fermé mais des fuites peuvent néanmoins exister. Grâce au fonctionnement en eau ces fuites ne sont pas contraignantes car l'eau n'est pas polluante et la recharge est aisée.

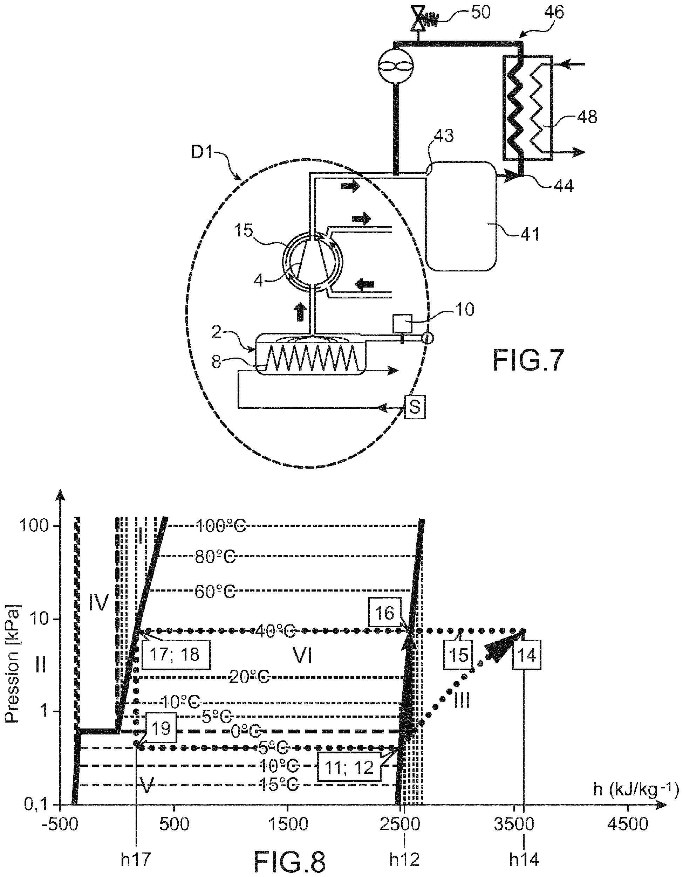

La figure 8 représente le diagramme de Mollier dans le cas d'un fonctionnement en circuit fermé, tels que celui du système S1. Dans ce cas, la vapeur sortant de la pompe à vide peut être à une pression inférieure à la pression atmosphérique et à une température à 100°C sans qu'elle ne condense. Dans le cas représenté sur le diagramme de la figure 8, la vapeur sortant de la pompe à vide est à une température de 40°C et à une pression de l'ordre de 7000 Pa.

Le fonctionnement de ce système va maintenant être décrit.

Dans l'état initial, le réservoir 32 est rempli avec un volume suffisant pour remplir la chambre 2 et l'échangeur 15. La pompe à vide et la circulation dans l'échangeur froid sont à l'arrêt, la vanne 36 est fermée.

On ferme la vanne 38 et on ouvre la vanne 36 pour remplir la chambre 2 selon un volume prédéfini, par exemple 80% du volume de la chambre, ce volume est détecté par exemple par un capteur de niveau situé dans la chambre, en mesurant le volume, en mesurant le temps de remplissage.

Lorsque ce niveau prédéterminé est atteint, la vanne 36 est fermée, la pompe à vide est activée et la vanne 38 est ouverte assurant la circulation de l'eau dans le deuxième échangeur 15, ce qui permet de maintenir une température de vapeur légèrement surchauffée en aval du deuxième échangeur 15.

Lorsque la température dans la chambre 2 baisse sous la température de la source de chaleur S, on active la circulation dans l'échangeur froid 8.

Lorsque la totalité du fluide a été sublimée ou évaporée dans l'échangeur froid 8, une chute de pression est détectée. On arrête la pompe à vide 4 et la circulation externe de l'échangeur froid 8.

La génération de vapeur dans la chambre 2 a lieu entre les points 19 et 11 du diagramme de la figure 8.

Entre les points 11 et 12, le fluide est de préférence légèrement surchauffé, par exemple de 5 °C pour garantir un flux entièrement gazeux.

Entre les points 13 et 16, la vapeur dans la pompe à vide 4 est échauffée jusqu'à la température de délivrance de la vapeur de la pompe à vide, environ 40°C dans l'exemple représenté. Puis sa pression est augmentée de manière quasi-isotherme jusqu'à la pression de délivrance de la vapeur, environ 7000 Pa dans l'exemple représenté.

La vapeur produite par la pompe à vide 4 et celle produite par le deuxième échangeur 15 sont rassemblées et traversent le quatrième échangeur 33 et échangent de la chaleur avec le circuit 34. La vapeur se condense complètement et s'écoule dans le réservoir 32. La condensation a lieu entre les points 16 et 17 du diagramme de la figure 8. Pour garantir l'absence de vapeur, l'eau liquide est légèrement sous-refroidie (points 17-18).

Le deuxième échangeur 15 est alimenté en continu par le réservoir 32.

Il est indiqué que l'eau est stockée jusqu'à ce que le volume de fluide dans la chambre 2 soit totalement sublimé ou évaporé.

Le système peut fonctionner jusqu'à ce que toute l'eau contenue dans la chambre 2 ait été évaporée, cette eau se retrouve dans le réservoir 32 et peut de nouveau remplir la chambre 2 en vue d'être évaporée.

Sur la figure 6, on peut voir un autre exemple de système S2 mettant en oeuvre le dispositif D3 et comportant, comme S1, un réservoir 32 collectant la vapeur condensée.

La vapeur générée par la pompe à vide et celle générée par la chaudière sont utilisées pour chauffer un circuit 34 par échange thermique, et la vapeur condensée est collectée par le réservoir 32.

La chaudière est alimentée par le réservoir 32 via une vanne 40 et la chambre 2 est alimentée par le réservoir 32 via une vanne 42.

Le fonctionnement du circulateur entre le deuxième échangeur 15 et la chaudière est synchronisée avec celui de la pompe à vide.

Il est à noter que les systèmes d'utilisation de chaleur pourraient ne pas être configurés en circuit fermé, i.e. l'eau sortant du quatrième échangeur 33 pourrait ne pas alimenter le réservoir 32 qui serait alors par exemple connecté au réseau R.

En outre, il pourrait être envisagé que la vapeur produite par la chaudière 20 ou par le deuxième échangeur 15 ne soit pas envoyée vers le quatrième échangeur 33 mais vers un autre système utilisateur, qui par exemple utiliserait la vapeur directement.

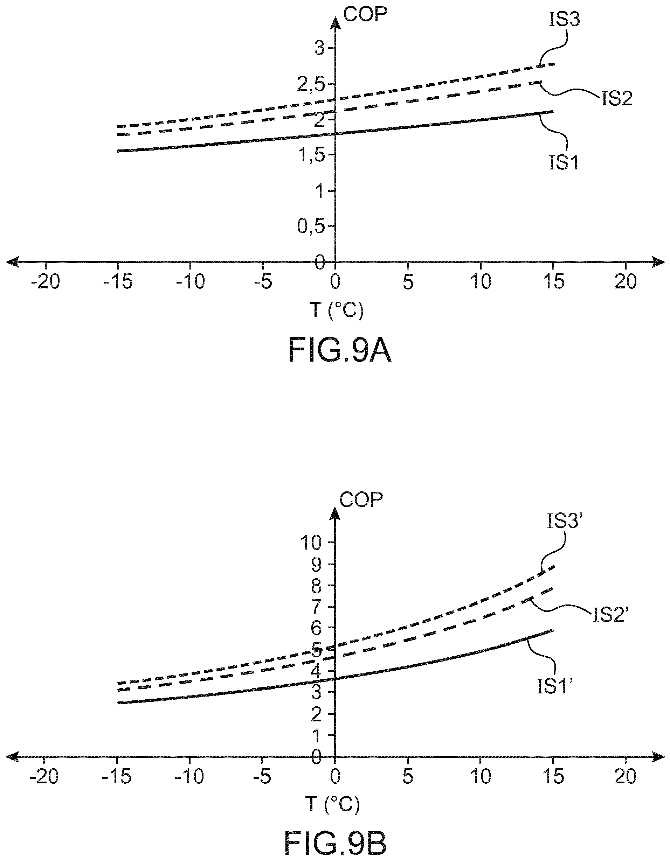

Sur les figures 9A et 9B on peut voir des représentations graphiques de la variation des coefficients de performance COP en fonction de la température d'évaporation/sublimation T en °C d'un dispositif de génération de vapeur à 100°C à pression atmosphérique en circuit ouvert et un système de production de vapeur à 40°C en circuit fermé respectivement.

Dans le cas d'un dispositif en circuit ouvert, le coefficient de performance COP est le rapport entre l'énergie thermique disponible à une température supérieure à la condensation, i.e. 100°C à pression atmosphérique, et l'énergie consommée par l'organe de pompage. On constate que le COP varie entre 1,55 et 2,78 selon les températures de sublimation et d'évaporation comprises entre -15°C et 15°C. Les courbes IS1, IS2 et IS3 correspondent respectivement à des rendements isentropiques de la pompe de de 0,5, 0,7 et 0,8.

Dans le cas d'un système en circuit fermé, l'énergie disponible se présente sous deux formes :

- sensible et supérieure à la température de condensation entre les points 4 et 6
- latente par condensation entre les points 6 et 7

Le coefficient COP peut s'écrire comme le rapport des enthalpies

$$COP = \frac{h14 - h17}{h14 - h12}$$

Les enthalpies h12, h14 et h17 sont repérées sur le diagramme de la figure 8.

Pour une température de condensation ou une production de vapeur à 40°C, le coefficient de performance (COP) varie entre 2,5 et 8,87 selon les températures de sublimation et d'évaporation comprises entre -15°C et 15°C. Les courbes IS1', IS2' et IS3' correspondent respectivement à des rendements isentropiques de la pompe de 0,5, 0,7 et 0,8.

Sur la figure 7, on peut voir une installation de stockage thermochimique comportant un dispositif de production de vapeur selon l'invention. Le dispositif mis en oeuvre est le dispositif D1.

Une installation de stockage thermochimique permet de stocker et déstocker de la chaleur, de manière non limitative, par une réaction d'hydratation/déshydratation du couple $SrBr_2.1H_2O$/ $SrBr_2.6H_2O$, sous forme solide, selon l'équation de réaction suivante :

$<SrBr_2.1H_2O> + 5(H_2O) \leftrightarrow <SrBr_2.6H_2O> + \Delta H_r$.
$\Delta H_r$ l'enthalpie de la réaction.

De la chaleur est stockée par déshydratation du $<SrBr_2.6H_2O>$ et la chaleur est libérée par hydratation $<SrBr_2.1H_2O>$

Il est par exemple possible de réaliser un stockage inter-saisonnier de la chaleur. Par exemple, des capteurs solaires permettent d'apporter la chaleur suffisante pour provoquer la réaction de déshydratation et donc stocker de la chaleur. En hiver, l'humidité de l'air est utilisée pour réhydrater le matériau de stockage, ce qui provoque un dégagement de chaleur. Cette chaleur peut par exemple être utilisée pour chauffer un bâtiment.

Lors de la phase de réhydratation, la quantité de chaleur que dégage la réaction dépend de la quantité de vapeur d'eau disponible et donc du taux d'humidité absolu de l'air, par exemple de l'air hivernal. Or, ce taux d'humidité est généralement faible en période froide, ce qui nuit à la performance de l'installation.

En couplant le dispositif de génération de vapeur selon l'invention et un réservoir de stockage par voie thermochimique on peut optimiser les performances de l'installation en compensant avec la vapeur produite par le dispositif selon l'invention le faible taux d'humidité dans l'air.

L'installation comporte en outre un réservoir 41 contenant un matériau de stockage de chaleur par voie thermochimique, par exemple du $SrBr_2.1H_2O/<SrBr_2.6H_2O$ comprenant une entrée d'alimentation 43 en air humide et une entrée d'évacuation 44 en air chaud. La sortie de vapeur du dispositif D1 est connectée à l'entrée d'alimentation 43 du réservoir 41.

Dans l'exemple représenté, le réservoir 41 de stockage de chaleur par voie thermochimique est couplé à un système de chauffage, par exemple un plancher chauffant.

La sortie d'évacuation 44 est connectée à un circuit 46 formant une boucle quasiment fermée rebouclant sur l'entrée d'alimentation 43. Au moins une partie du circuit 46 est en échange thermique avec un circuit de fluide 48 du plancher chauffant. Le circuit 46 comporte des moyens pour faire circuler l'air dans le circuit, par exemple un ventilateur. De préférence, le circuit 46 comporte une soupape de surpression 50.

L'installation comporte des moyens (non représentés) pour déshydrater le matériau de stockage et plus généralement pour régénérer le matériau de stockage et stocker de la chaleur.

Le fonctionnement de l'installation de la figure 7 va maintenant être décrit.

On considère que le matériau de stockage thermochimique a été au moins en partie déshydraté.

Lors d'une période durant laquelle le taux d'humidité dans l'air est insuffisant pour assurer une hydratation du matériau de stockage thermique avec un rendement suffisant, le dispositif D1 est activé comme décrit ci-dessus et délivre de la vapeur au réservoir de stockage 41. La vapeur est injectée dans le réservoir en mélange avec de l'air provenant du circuit, celle-ci hydrate le matériau de stockage.

Cette réaction d'hydratation est exothermique, un dégagement de chaleur a lieu, l'air sortant du réservoir est donc chaud. Il circule dans le circuit et échange de la chaleur avec le fluide circulant dans le circuit du plancher chauffant. Ce fluide est donc échauffé et chauffe le plancher.

L'air est ensuite réinjecté dans le réservoir par l'entrée d'alimentation 43. La concentration en eau du fluide circulant dans le réservoir est fixée de sorte à obtenir un rendement d'hydratation élevé.

Les moyens assurant le déstockage de la chaleur par hydratation au moyen de l'air ambiant uniquement ne sont pas décrits.

Le dispositif de production de vapeur peut être utilisé pour augmenter le taux d'humidité dans l'air ambiant d'un local. Avantageusement la source de chaleur basse température sera à l'extérieur du local pour ne pas refroidir le local.

L'invention permet de réaliser une installation fonctionnant en circuit quasi fermé, seule la soupape de surpression est ouverte vers l'extérieur et l'arrivée est connectée au réseau extérieur, grâce à l'apport de vapeur d'eau délivré par le dispositif générateur de vapeur.

Dans un exemple de réalisation avantageux, on peut prévoir de coupler l'installation avec un capteur de mesure de l'humidité dans l'air extérieur et/ou un capteur de température de l'air extérieur et de commander la mise en route du dispositif de production de vapeur en fonction de la valeur du taux d'humidité et/ou de la température extérieure. Si le taux d'humidité est trop faible et/ou la température trop basse, le dispositif est mis en route.

Il sera compris que le système de stockage de la figure 7 pourrait comporter le dispositif D2 ou D3 à la place du dispositif D1.

Un exemple numérique du fonctionnement de l'installation de la figure 7 va être donné.

On considère le cas d'une habitation classé bâtiment basse consommation ayant une puissance de chauffage de l'ordre de 2000W à -10°C.

Le dispositif de production de vapeur est par exemple activé pour une température extérieure de -10°C. La source de chaleur S est alors formée par l'air extérieur à -10°C, celui-ci circule dans et/ou autour de la chambre 2 avec un débit de 1500 kg/h. La pression dans la chambre 2 est de 166 Pa.

La vapeur produite est à -15°C avec un débit de 2,1 kg/h.

La vapeur sort à une température de 100°C si la pression du circuit d'air humide est proche de la pression atmosphérique.

Le mélange air-vapeur entre dans le réservoir à une température de 30,6°C avec une humidité absolue de 13.3 g d'eau par kg d'air sec, également désigné kg_as et en sort à une température de 46,9°C avec une humidité absolue de 8.7 g/kg_as. Le débit total du mélange air-vapeur est de 450 kg/h.

L'eau du plancher chauffant entre à 30°C dans et ressort à 35°C après échange avec l'air sortant du réservoir.

L'air ressort de l'échangeur à une température de 31°C.

Il sera compris que le réservoir de stockage thermochimique peut être couplé à tout autre système utilisant une source de chaleur, par exemple un système industriel.

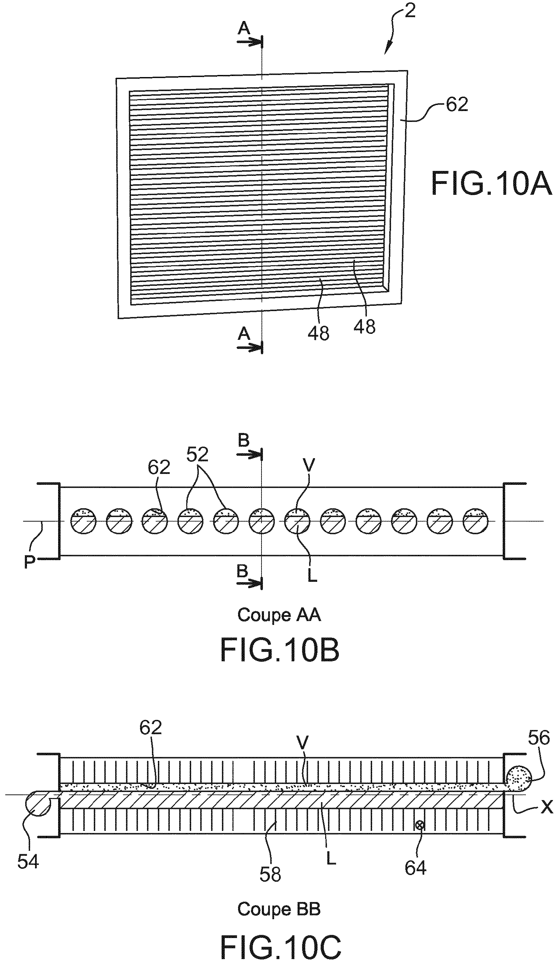

Sur les figures 10A à 10C, on peut voir un exemple de réalisation d'une chambre particulièrement adaptée au dispositif selon l'invention, en particulier lorsque l'eau se solidifie.

La chambre 2 est du type batterie à ailettes dont la structure est bien connue.

Dans l'exemple représenté, il s'agit d'une batterie à ailettes à une nappe de tubes 52 s'étendant selon la direction longitudinale X entre un distributeur 54 de l'eau dans tous les tubes et à un collecteur 56 de la vapeur produite dans tous les tubes. Tous les tubes sont connectés en parallèle par une première extrémité au distributeur 54 et par une deuxième extrémité au collecteur 56.

La nappe de tubes est contenue dans un plan moyen P.

Les tubes sont destinés à être remplis partiellement d'eau liquide de sorte à ménager un volume libre 60 dans la partie supérieure de chaque tube 52 pour la production de vapeur. Le plan moyen P est destiné à être disposé horizontalement de sorte à ménager dans tous les tubes le volume libre 60.

Le distributeur 54 est disposé par rapport aux tubes de sorte que, lors du remplissage en eau, les volumes libres 60 au moins soient laissés libres et le collecteur est situé de sorte à ne collecter que la vapeur.

Le distributeur 54 est destiné à être relié par exemple au réseau R et le collecteur 56 est destiné à être relié à la pompe à vide 4.

Des ailettes 58 s'étendent perpendiculairement aux tubes de part et d'autre des tubes par rapport au plan moyen P et sont en contact avec les tubes.

Un cadre 62 est prévu autour des ailettes, du distributeur 54 et du collecteur 56 pour former un ensemble d'un seul tenant.

Le flux d'air 64 formant la source de chaleur basse température, par exemple généré par un ventilateur, est tel qu'il est parallèle aux ailettes.

L'air passe à travers la surface quadrillée de tubes et d'ailettes. La distance maximale entre les flux d'air à l'extérieur des tubes et le flux de fluide dans les tubes est réduite.

L'eau liquide au remplissage qui est destiné dans un mode de réalisation à se transformer en glace est désignée par L et l'eau vapeur au-dessus de l'eau liquide est désignée V.

Grâce à la structure de la chambre des figures 10A à 10C, la surface d'eau liquide ou glace qui va se transformer en vapeur est grande. En outre grâce à la répartition des ailettes, de la chaleur est apportée par les ailettes à tout le fluide.

La présente invention est particulièrement adaptée à la production de vapeur d'eau. Grâce à l'invention, il est possible de produire de la vapeur, avantageusement de la vapeur d'eau à une pression d'au moins quelques milliers de pascals, voire à pression atmosphérique, avec une source de chaleur à basse température.

En outre le dispositif selon l'invention peut produire de la vapeur d'eau en utilisant des composants qui ne sont généralement pas utilisables avec l'eau par exemple une pompe à vide.

**Revendications**

1. Dispositif de génération de vapeur à une pression d'au moins quelques milliers de pascals utilisant une source de chaleur à basse température (S), comportant une chambre (2) de génération de vapeur à basse pression et basse température, ladite chambre (2) étant configurée pour générer de la vapeur par sublimation d'un solide et/ou évaporation d'un liquide, ladite chambre (2) étant également configurée pour échanger de la chaleur avec la source de chaleur à basse température (S), une pompe à vide (4) pour abaisser la pression dans ladite chambre (2) et pour comprimer la vapeur générée dans ladite chambre (2) et des moyens de régulation de la température de la pompe à vide de sorte que la vapeur ne condense pas dans la pompe à vide (4).

2. Dispositif de génération de vapeur selon la revendication 1, comportant un premier échangeur thermique (8) dans la chambre (2), ledit premier échangeur thermique (8) étant destiné à être connecté à la source de chaleur à basse température (S).

3. Dispositif de génération de vapeur selon la revendication 1 ou 2, dans lequel les moyens de régulation de la température de la pompe à vide (4) comportent un deuxième échangeur thermique (15) configuré pour échanger de la chaleur avec la pompe à vide (4) et destiné à être traversé par un caloporteur, les moyens de régulation de la température de la pompe à vide comportant avantageusement au moins un premier capteur de température (16) du caloporteur en sortie du deuxième échangeur thermique (15) et des moyens de régulation du débit de caloporteur dans le deuxième échangeur thermique commandés à partir des signaux fournis par le premier capteur de température.

4. Dispositif de génération de vapeur selon l'une des revendications 1 à 3, comportant au moins un deuxième capteur de température (9) dans la chambre (2).

5. Dispositif de génération de vapeur selon l'une des revendications 1 à 4, comportant un capteur ou des capteurs de pression en amont et/ou en aval de la pompe à vide (4).

6. Dispositif de génération de vapeur selon l'une des revendications 3 à 5, comportant une unité de commande commandant au moins la pompe à vide (4) et les moyens de régulation de la température de la pompe à vide en fonction des signaux envoyés par les capteurs.

**7.** Dispositif de génération de vapeur selon l'une des revendications 1 à 6 en combinaison avec la revendication 3, comportant une chaudière (20) de production de vapeur comprenant un troisième échangeur thermique (26) connecté en circuit fermé avec le premier échangeur thermique (15), la chambre (2) et la chaudière (20) étant destinées à être connectés à un réseau d'alimentation en eau (R), ledit dispositif comportant des moyens (10, 23) pour autoriser et interrompre la communication fluidique entre la chambre (2) et le réseau d'eau (R) et entre la chaudière (20) et le réseau d'eau (R).

**8.** Dispositif de génération de vapeur selon l'une des revendications 1 à 6, dans lequel le deuxième échangeur thermique (15) est configuré pour produire directement de la vapeur, la chambre (2) et le deuxième échangeur (15) étant destinés à être connectés à un réseau d'alimentation en eau (R), ledit dispositif comportant des moyens (23) pour autoriser et interrompre la communication fluidique entre la chambre (2) et le réseau d'eau (R) et entre le deuxième échangeur thermique (15) et le réseau d'eau (R).

**9.** Dispositif de génération de vapeur selon l'une des revendications 1 à 8, dans lequel la chambre (2) est du type batterie à ailettes.

**10.** Système de production de chaleur comportant au moins un dispositif de génération de vapeur selon l'une des revendications 1 à 9, un quatrième échangeur thermique (33) destiné à transmettre la chaleur de la vapeur produite par ledit dispositif à un circuit utilisateur, et un réservoir de collecte (32) connecté au quatrième échangeur thermique (33) et destiné à collecter la vapeur condensée, le dispositif de génération de vapeur, le quatrième échangeur thermique (33) et le réservoir de collecte (32) étant avantageusement connectés en circuit fermé.

**11.** Système de production de chaleur selon la revendication 10, dans lequel le dispositif de génération de chaleur est un dispositif selon la revendication 8, ladite chaudière (20) étant connectée au réservoir de collecte (32) et la chambre (2) étant connectée au réservoir de collecte (32).

**12.** Système de production de chaleur selon la revendication 10, dans lequel le dispositif de génération de chaleur est un dispositif selon la revendication 8, le deuxième échangeur thermique(15) étant connecté au réservoir de collecte (32) et la chambre (2) étant connectée au réservoir de collecte (32).

**13.** Système de stockage de chaleur par voie thermochimique comportant un dispositif de génération de vapeur selon l'une des revendications 1 à 9, au moins un réservoir de stockage (41) de chaleur par voie thermochimique contenant du matériau de stockage de chaleur par voie thermochimique et des moyens pour collecter la chaleur libérée par le matériau de stockage par voie thermochimique.

**14.** Procédé de génération de vapeur à une pression donnée d'au moins quelques milliers de pascals et à une température donnée utilisant une source de chaleur à une basse température donnée, comportant les étapes :

a) remplissage au moins partiel d'une chambre avec un fluide liquide et fermeture étanche de la chambre,
b) diminution de la pression dans ladite chambre, au moyen d'une pompe à vide, jusqu'à atteindre une pression de travail et une température inférieure à la température donnée de la source de chaleur à basse température et,
c) lorsque la température dans la chambre est inférieure à la température de la source de chaleur, apport de chaleur au fluide par la source de chaleur,
d) production de vapeur,
e) compression et chauffage de la vapeur pour l'amener à la pression donnée et à la température donnée au moyen de la pompe à vide,
f) régulation de la température de la pompe à vide pour éviter la condensation de la vapeur dans la pompe à vide,
g) arrêt de la génération de vapeur.

**15.** Procédé de génération de vapeur selon la revendication 14, dans l'étape g) a lieu lorsque la chambre est vide, et/ou dans lequel la source de chaleur à basse température est l'air ambiant, et/ou dans lequel le fluide est de l'eau et la vapeur générée est à pression atmosphérique.

FIG.1

FIG.2

FIG.3

FIG.4

FIG.5

FIG.6

FIG.7

FIG.8

FIG.9A

FIG.9B

FIG.10A

Coupe AA

FIG.10B

Coupe BB

FIG.10C

Europäisches Patentamt

European Patent Office

Office européen des brevets

# RAPPORT DE RECHERCHE EUROPEENNE

Numéro de la demande

EP 17 20 9145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2012/176274 A1 (TAIYO ENERGY KENKYUSHO INC [JP]; SATO KENJI [JP]) 27 décembre 2012 (2012-12-27) * abrégé; figures * ----- | 1-15 | INV. F22B1/18 F22B3/04 |
| A | WO 89/12201 A1 (SIEMENS AG [DE]) 14 décembre 1989 (1989-12-14) * page 3, ligne 11 - page 5, ligne 18; revendications; figures * * abrégé * ----- | 1-15 | |
| A | WO 92/14094 A1 (SIEMENS AG [DE]) 20 août 1992 (1992-08-20) * page 3, ligne 1 - page 4, ligne 25; revendications; figure * * abrégé * ----- | 1-15 | |
| A | US 2007/187850 A1 (TOMASEL FERNANDO G [US] ET AL) 16 août 2007 (2007-08-16) * alinéa [0017] - alinéa [0034]; revendications; figures * * abrégé * ----- | 1-15 | **DOMAINES TECHNIQUES RECHERCHES (IPC)** F22B |

Le présent rapport a été établi pour toutes les revendications

| Lieu de la recherche | Date d'achèvement de la recherche | Examinateur |
|---|---|---|
| Munich | 8 mai 2018 | Zerf, Georges |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 20 9145

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-05-2018

| Document brevet cité au rapport de recherche | | Date de publication | Membre(s) de la famille de brevet(s) | | Date de publication |
|---|---|---|---|---|---|
| WO 2012176274 | A1 | 27-12-2012 | AUCUN | | |
| WO 8912201 | A1 | 14-12-1989 | DE | 58902718 D1 | 17-12-1992 |
| | | | EP | 0423135 A1 | 24-04-1991 |
| | | | JP | H0729363 Y2 | 05-07-1995 |
| | | | JP | H03500008 U | 05-12-1991 |
| | | | US | 5169502 A | 08-12-1992 |
| | | | WO | 8912201 A1 | 14-12-1989 |
| WO 9214094 | A1 | 20-08-1992 | AU | 8959291 A | 07-09-1992 |
| | | | EP | 0570379 A1 | 24-11-1993 |
| | | | WO | 9214094 A1 | 20-08-1992 |
| US 2007187850 | A1 | 16-08-2007 | CN | 101473131 A | 01-07-2009 |
| | | | EP | 1993713 A2 | 26-11-2008 |
| | | | JP | 2009527716 A | 30-07-2009 |
| | | | KR | 20080096684 A | 31-10-2008 |
| | | | TW | 200848664 A | 16-12-2008 |
| | | | US | 2007187850 A1 | 16-08-2007 |
| | | | WO | 2008027079 A2 | 06-03-2008 |

EPO FORM P0460

Pour tout renseignement concernant cette annexe : voir Journal Officiel de l'Office européen des brevets, No.12/82

**EP 3 339 729 A1**

## RÉFÉRENCES CITÉES DANS LA DESCRIPTION

**Documents brevets cités dans la description**

- US 5787716 A

- WO 8912201 A